Europäisches Patentamt

European Patent Office

Office européen des brevets

(11) Publication number: **0 137 928**
A2

(12) # EUROPEAN PATENT APPLICATION

(21) Application number: 84108713.3

(51) Int. Cl.⁴: **H 04 L 1/12**

(22) Date of filing: 24.07.84

(30) Priority: 19.09.83 US 533390

(43) Date of publication of application: 24.04.85
Bulletin 85/17

(84) Designated Contracting States: DE FR GB

(71) Applicant: International Business Machines Corporation,
Old Orchard Road, Armonk, N.Y. 10504 (US)

(72) Inventor: Sachs, Martin William, 28 Warnock Drive,
Wesport, CT 06880 (US)
Inventor: Snedaker, Mark Carl, Stewart Rd. Box 26,
Vestal, NY 13850 (US)

(74) Representative: Möhlen, Wolfgang C., Dipl.-Ing., IBM
Switzerland Zürich Patent Operations Säumerstrasse 4,
CH-8803 Rüschlikon (CH)

(54) Data exchange flow control method and apparatus.

(57) When two transceivers (12, 14) communicate with each
other, the one transceiver may operate at a different internal
speed with respect to the other transceiver. In addition, one
transceiver may possess different buffering capabilities
with respect to the other transceiver. As a result, when one
transceiver attempts to communicate with the other trans-
ceiver, the more powerful transceiver may overload the
other transceiver. This is avoided in the disclosed system
and method in which, prior to the initiation of a data trans-
mission, the two transceivers exchange count and rate in-
formation. Count information designates the maximum num-
ber of bytes of data which the transceiver can receive within
a single data frame. Rate information designates the max-
imum rate at which the transceiver can receive data frames.
When the exchange of count and rate information is com-
pleted, data transmission will take place using the smaller
of the two counts, and the smaller of the two rates.

DATA EXCHANGE FLOW CONTROL METHOD AND APPARATUS

The present invention pertains to a method and apparatus for controlling the flow of data from one transceiver to another transceiver, and more particularly, to a method of selectively varying the number of bytes of data per data frame and the rate at which the frames are transmitted from one transceiver to another in accordance with the receive capabilities of the transceivers.

When a first transceiver is connected to a second transceiver, for the purpose of transmitting and receiving data, the first transceiver may possess different buffering capabilities or operate at a different internal speed with respect to the second transceiver. As a result, when the first transceiver begins its transmission of data, the more powerful transceiver may overload the less powerful transceiver. In order to prevent this overload condition from occurring, it is necessary to manually configure the first and second transceivers to operate at a speed or rate corresponding to the less powerful transceiver. It is extremely inconvenient to perform such a manual task whenever said transceivers are connected together for the purpose of transmitting data. In addition, such manual configuration of transceivers precludes a first transceiver from being connected to a second and a third transceiver unless the first, second and third transceivers possess the same speed or rate capability.

It is an object of present invention to devise an apparatus and a method for controlling the flow of data between two transceivers in such a way that if one of both is more powerful or faster in operation, it cannot overload the other one having lesser capabilities.

In a system in which a first transceiving means is
connected to a second transceiving means, the invention
provides that in response to directions originating from
a system unit operating under the control of an I/O
(input/output) control program, the first transceiving
means automatically transmits a first count and a first
rate to the second transceiving means indicative of the
maximum number of bytes of data which said first transceiving means can receive within a single data frame and
the maximum rate at which the data frames may be transmitted by said second transceiving means, respectively.
In the preferred embodiment, it is assumed that a transceiver's transmit capability is approximately equal to
the transceiver's receive capability. The second transceiving means receives the first count and the first rate
and responds by transmitting a second count and a second
rate indicative of the maximum number of bytes of data
which said second transceiving means can receive within a
single data frame and the maximum rate at which the data
frames may be transmitted by said first transceiving
means. When the first transceiving means receives the
second count and the second rate, it compares the first
count and the first rate with the second count and the
second rate. It then selects the lesser of the two
quantities, that is, the lesser of the two counts and the
lesser of the two rates. Upon request for data from the
second transceiving means, the first transceiving means
begings to transmit data at a rate corresponding to the
lesser of the two counts and the lesser of the two rates.
Similarly, prior to responding with its own transmission
of data, the second transceiving means also compares the
first count and the first rate with the second count and
the second rate. Upon request for data from the first transceiving means, the second transceiving means transmits its data at a rate corresponding to the lesser of the two counts and the lesser of the two rates. As a result, the more powerful of the two transceiving means can never overload the other transceiving means.

A full understanding of the present invention will be obtained from a reading of the detailed description given hereinbelow and the accompanying drawings:

Figure 1 illustrates the data exchange flow control apparatus according to the present invention; and

Figure 2a and 2b illustrate a construction of a portion of the first and second transceiver shown in Figure 1.

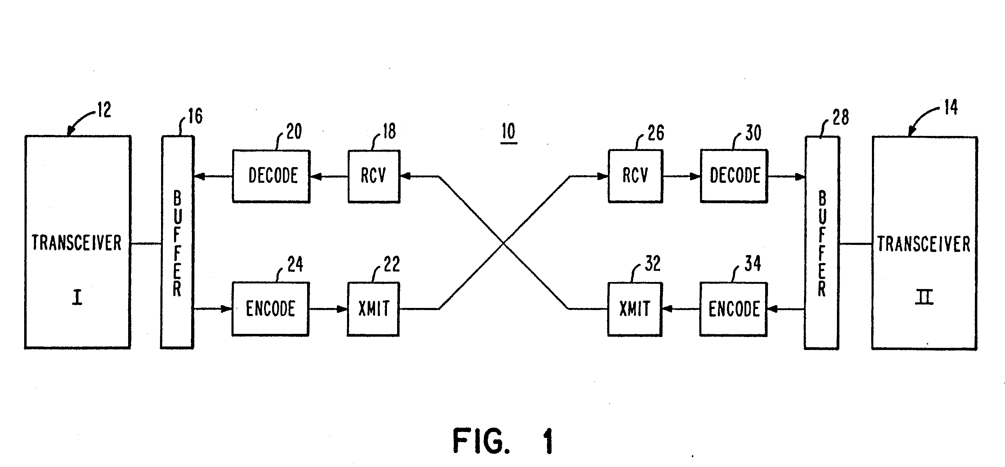

Figure 1 illustrates the data exchange flow control apparatus 10 in which the present invention is embodied. In Figure 1, a first transceiver 12 transmits data to a second transceiver 14. The first transceiver may be a central processing unit within a computer system, and the second transceiver may be a remote terminal or a remote controller for a group of terminals. The first transceiver 12 is connected to a first buffer 16 for temporarily storing transmitted or received data. The first buffer 16 is connected to a first receive circuit 18 via a first decode circuit 20 and to a first transmit circuit 22 via a first encode circuit 24. The first transmit circuit 22 is connected to a second receive circuit 26. The second receive circuit is connected to a second buffer circuit 28 via a second decode circuit 30. The second buffer circuit 28 is connected to a second transmit circuit 32 via a second encode circuit 34. The second transmit circuit 32 is further connected to the first receive circuit 18. The second buffer circuit 28 is connected to the second transceiver 14.

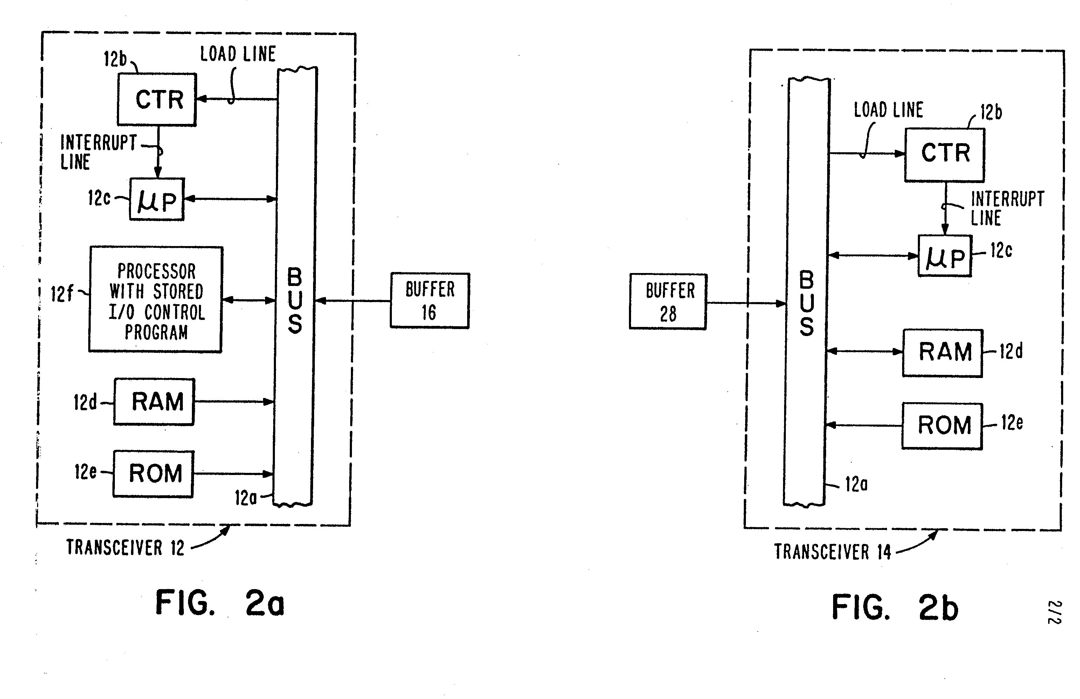

A further construction of a portion of the first and second transceiver 12 and 14 shown in Figure 1 is illustrated in Figure 2a and Figure 2b, respectively. The first and second buffer 16 and 28 are each connected to a system bus 12a. A counter 12b is connected to the system bus 12a associated with transceivers 12 and 14 via a load line. A microprocessor 12c, such as an INTEL 8086 microprocessor, is connected to the system bus 12a, and to the counter 12b via an interrupt line. A random access memory (RAM) 12d is connected to the system bus 12a. A read-only-memory (ROM) 12e is also connected to the system bus. The ROM 12e includes a program encoded therein, the program being defined in detail in an algorithm appearing below following a description of the functional operation of the present invention. However, in Figure 2a, a further processor 12f, associated with transceiver 12, is connected to the system bus 12a. The processor 12f represents a typical computer operating system, the operating system being under the control of an I/O control program.

A detailed description of the functional operation of the present invention is provided in the following paragraphs with reference to Figures 1 and 2 of the drawings.

Whenever transceiver 12 wishes to transmit data to, or receive data from transceiver 14, the processor 12f, under control of its I/O control program, directs the microprocessor 12c of transceiver 12 to begin executing instructions stored in the ROM 12e of transceiver 12. As a result, the program encoded in ROM 12e of transceiver 12 directs the microprocessor 12c to retrieve specific count and rate data from RAM 12d, the specific count and rate data being representative of the receive capability of the transceiver 12. The count data represents the maximum number of bytes of transmitted data which transceiver 12 can receive within a single data frame. The rate data represents the maximum rate at which the data frames may be transmitted by transceiver 14. The program encoded in ROM 12e of transceiver 12 then directs the microprocessor 12c of transceiver 12 to transmit the count and rate data via a "select frame", the "select frame" being of a fixed minimum size. The count and rate data, transmitted in the select frame, is temporarily stored in buffer 16. The count and rate data is serially encoded by encode circuit 24 and serially transmitted by transmit circuit 22. The receive circuit 26 receives the count and rate data, the data being decoded by the decode circuit 30. The decoded count and rate data is temporarily stored in buffer 28. Microprocessor 12c of transceiver 14 retrieves the decoded count and rate data, of the select frame, from buffer 28 and stores the data in RAM 12d of transceiver 14.

When the decoded count and rate data is stored in RAM 12d of transceiver 14, the microprocessor 12c of transceiver 14 retrieves other specific count and rate data, indicative of the receive capabilities of transceiver 14, from the RAM 12d of transceiver 14. The microprocessor 12c of transceiver 14 transmits this other specific count and rate data to transceiver 12 via an "accept frame ", the "accept frame" being of a fixed minimum size. The other specific count and rate data is encoded via encode circuit 34 and is transmitted via the transmit circuit 32. The other specific count and rate data is serially received by receive circuit 18, decoded via decode circuit 20, and temporarily stored in buffer 16. The microprocessor 12c of transceiver 12 retrieves the decoded other specific count and rate data from buffer 16 and stores this data in the RAM 12d of transceiver 12.

The RAM 12d, disposed within transceiver 12 and transceiver 14, each contain count and rate data corresponding to the receive capability of the transceiver 12 and transceiver 14. The specific count and rate data correspond to the receive capability of transceiver 12, the other specific count and rate data corresponding to the receive capability of transceiver 14. The following further operation occurs within transceiver 12 and transceiver 14.

The program encoded in ROM 12e directs the microprocessor 12c to compare the count, associated with the specific count and rate data, with the count, associated with the other specific count and rate data. The smaller of the two counts is selected and re-stored in RAM 12d. The rate, associated with the specific count and rate data, is compared with the rate, associated with the other specific count and rate data. The smaller of the two rates is selected and re-stored in RAM 12d. As a result, RAM 12d, disposed within transceiver 12 and transceiver 14, contains a selected count and a selected rate corresponding to the smaller of the two counts and the smaller of the two rates.

As mentioned above, the selected rate represents the maximum rate at which the data frames may be transmitted by both transceiver 12 and transceiver 14, and the selected count represents the maximum number of bytes of data which may be transmitted in a single data frame by both transceiver 12 and transceiver 14. This rate correlates to a specific number of data frames per unit time. The specific number of data frames per unit time defines a specified time gap between adjacent data frames. Microprocessor 12c, in transceivers 12 and 14, calculates the specified time gap between adjacent data frames from the selected rate and the selected count stored in RAM 12d, and is able to load the specified time gap into counter 12b via the load line shown in Figure 2. In this embodiment of invention, the counter 12b is a down-counter.

Upon request for data by transceiver 14, transceiver 12 begins its transmission of data to transceiver 14. Microprocessor 12c, in transceiver 12, transmits the data to transceiver 14 at a count and rate corresponding to the selected count and the selected rate. For microprocessor 12c to begin its transmission of data, the down-counter 12b is loaded with the calculated time gap and begins its count down from the specified time stored therein. The buffer 16 is loaded with the proper number of data bytes. When the count of the down counter 12b is zero, the operation of microprocessor 12c is interrupted by the down counter 12b via the interrupt line. As a result, the data frame in the buffer is transmitted. One data frame of data has been transmitted to transceiver 14 via encode circuit 24, transmit circuit 22, receive circuit 26, and decode circuit 30. A selected number of bytes of data is transmitted within the one data frame, the selected number corresponding to the selected count stored in RAM 12d. When the next data frame is transmitted as described above, the two data frames have been transmitted at a rate corresponding to the selected rate stored in RAM 12d.

When transmission of data of transceiver 14 is complete, the same sequence of events could transpire with respect to the transmission of data from transceiver 14 to transceiver 12, that is, the data is transmitted at a count and rate corresponding to the selected count and the selected rate. Consequently, the more powerful transceiver cannot overload the other transceiver.

A description of the program encoded in ROM 12e is provided in the following paragraphs.

The following assumptions are made with respect to the following description of the program encoded in ROM 12e: The select and accept frames each have three parameters—that is, count, rate max. and rate min. The rate data is expressed in number of bytes of gap. A mechanism has transferred the three parameters from the receive frame buffer to work areas that are accessible by these routines. The assignments are: area1 - count; area2 - rate max.; and area3 - rate min. The constants that defined the transceiver's capabilities are stored as follows: area4 - max. frame size; area5 - max. data rate; and area6 - min. data rate. A hardware counter exists that can be loaded by the program and, once loaded, counts that value down and interrupts the processor when it reaches zero. A mechanism exists that uses the constants in area4, area5 and area6 as parameters for the generation of select or accept frames that are transmitted by the transceivers mentioned in the above embodiment of the invention.

Enter here when the received frame is either a select or an accept frame: step 1- compare area1 to area4, store smallest in area7; step 2 - compare area3 to area5, go to error routine to send reject if area3 is smaller than area5, exit to prepare for data transfer if area3 is larger than area5.

Enter here to prepare DATA frames: step 1 - load interrupt counter with the value in area2; step 2 - get value from area7, load this number of bytes of data in data frame; and step 3 - wait for interrupt, then transmit frame.

C L A I M S

1.    A data exchange flow control apparatus capable
of controlling a set of data transfer characteristics
associated with the transfer of data between a first
transceiver unit (12) and a second transceiver unit (14),
characterized in that it comprises:

first means (12a...12f; 12) disposed within said first
transceiver unit for transmitting initial data flow information to said second transceiver unit indicative of
the receive capability of said first transceiver unit;
and

second means (12a...12e; 14) disposed within said second
transceiver unit and responsive to the receipt of said
initial data flow information transmitted by said first
means for transmitting responsive data flow information
to said first transceiver unit indicative of the receive
capability of said second transceiver unit;

said first means and said second means constraining said
data transfer characteristics to correspond to the receive capability associated with the lesser capable of
said first and said second transceiver unit in response
to said initial data flow information and said responsive
data flow information, respectively.

2.    The data exchange flow control apparatus of
claim 1, characterized in that said data transfer characteristics include count information indicative of the
maximum number of bytes of data which may be received by
said first transceiver unit (12) within a single data frame and rate information indicative of the maximum rate at which data frames may be received by said first transceiver unit.

3.   The data exchange flow control apparatus of claim 1, characterized in that said first means comprises:

first processing means (12f) for developing an output signal indicative of the initiation of a data exchange flow control operation;

memory means (12d, 12e) for storing a program and a set of data transfer characteristics associated with said transmitting unit; and

second processing means (12c) responsive to said output signal from said first processing means for retrieving said set of data transfer characteristics from said memory means and for transmitting said data transfer characteristics to said second transceiver unit in response to said program stored in said memory means.

4.   The data exchange flow control apparatus of claim 3, characterized in that said second means comprises:

memory means (12d, 12e) for storing a further program and a further set of data transfer characteristics associated with said receiving unit; and

processing means (12b) responsive to said data transfer characteristics from said second processing means (12c) of said first means for retrieving said further set of data transfer characteristics from said memory means of said second means and for transmitting said further set of data transfer characteristics to said first transceiver unit in response to said further program stored in said memory means.

5. The data exchange flow control apparatus of claim 4, characterized in that said data transfer characteristics include count information indicative of the maximum number of bytes of data which may be received by said first transceiver unit or said second transceiver unit within a single data frame and rate information indicative of the maximum rate at which the data frames may be received by said first transceiver unit or said second transceiver unit.

6. A method of limiting the data transfer characteristics associated with the transfer of data between a first transceiver unit (12) and a second transceiver unit (14), characterized by the steps of:

determining the data transfer characteristics associated with said first transceiver unit and said second transceiver unit, said data transfer characteristics being indicative of the receive capability of said first transceiver unit and said second transceiver unit;

comparing the data transfer characteristics associated with the first transceiver unit with the data transfer characteristics associated with the second transceiver unit;

selecting the one of each pair of data transfer characteristics corresponding to the lesser capable of said
first transceiver unit and said second transceiver unit;
and

limiting the data transfer characteristics associated
with the transfer of data between the first transceiver
unit and the second transceiver unit in accordance with
the selected ones of said data transfer characteristics.

FIG. 1

FIG. 2b

TRANSCEIVER 14

LOAD LINE

CTR 12b

INTERRUPT LINE

μP 12c

RAM 12d

ROM 12e

B U S 12a

BUFFER 28

FIG. 2a

TRANSCEIVER 12

LOAD LINE

CTR 12b

INTERRUPT LINE

μP 12c

PROCESSOR WITH STORED I/O CONTROL PROGRAM 12f

RAM 12d

ROM 12e

B U S 12a

BUFFER 16